# EUROPÄISCHE PATENTSCHRIFT

(11) **EP 1 098 454 B1**
(45) Veröffentlichungstag und Bekanntmachung des Hinweises auf die Patenterteilung: **28.04.2010**
(21) Anmeldenummer: 00120344.7
(22) Anmeldetag: 16.09.2000
(51) Int. Cl.: H04B 7/08

(54) **Verfahren zur Auswahl einer von mehreren Antennen in einer Antennendiversity-Empfangsanlage und Antennendiversity-Empfangsanlage**
Method for selecting an antenna among a plurality of antennas in an antenna diversity reception installation and antenna diversity reception installation
Procédé pour sélectionner une antenne parmi une pluralité d'antennes dans une installation de réception en diversité d'antennes et installation de réception en diversité d'antennes

(30) Priorität: 08.11.1999 DE 19953728
(43) Veröffentlichungstag der Anmeldung: 09.05.2001
(73) Patentinhaber: Harman Becker Automotive Systems GmbH, 76307 Karlsbad (DE)
(72) Erfinder: Brinkhaus, Stefan, 75196 Remchingen (DE); Becker, Karl-Anton, 76307 Karlsbad (DE)
(74) Vertreter: Patentanwälte Westphal, Mussgnug & Partner

(56) Entgegenhaltungen:
- EP-A- 0 270 188
- EP-A- 0 475 188
- EP-A- 0 792 031
- WO-A-94/10764
- DE-A- 3 938 717
- DE-A- 4 403 612
- DE-A- 19 603 514
- US-A- 4 742 568
- US-A- 5 826 179

## Beschreibung

Gattungsgemäße Verfahren und Anordnungen sind beispielsweise aus der DE 199 53 728 B4 bekannt. Ausgestaltungen und Alternativen hierzu sind beispielsweise der US 4 742 568 A, DE 39 38 717 A, WO 94/10764 A, DE 44 03 612 A und der EP 0270 188 A zu entnehmen.

Die Erfindung betrifft ein Verfahren zur Auswahl einer von mehreren Antennen in einer Antennendiversity-Empfangsanlage mit einem Antennenwahlschalter, mit einer Auswerteschaltung und mit einem Funkempfänger nach dem Oberbegriff des Patentanspruchs 1.

Die Erfindung betrifft weiter eine Antennendiversity-Empfangsanlage mit einem Antennenwahlschalter, mit einer Auswerteschaltung und mit einem Funkempfänger nach dem Oberbegriff des Patentsanspruchs 7.

Eine Antennendiversity-Empfangsanlage ist eine Funkempfangsanlage mit einem Funkempfänger, der an eine von mehreren, meist räumlich getrennten Antennen anschließbar ist. Derartige Antennendiversity-Empfangsanlagen werden zum Beispiel in Kraftfahrzeugen eingesetzt. Als Antennen werden bevorzugt Scheibenantennen vorgesehen, die beispielsweise in die Scheiben des Kraftfahrzeuges integriert sind. Bei Betrieb der Antennendiversity-Empfangsanlage, beispielsweise eine Rundfunkempfangsanlage, eine Fernsehempfangsanlage oder eine Telefonanlage, wählt eine Auswahlschaltung nach vorgebbaren Kriterien eine der Antennen zum Anschließen an den Funkempfänger aus.

Es gibt jedoch häufig derart ungünstige Empfangsbedingungen, dass die Auswahlschaltung ständig von einer Antenne auf die andere umschaltet. Diese Umschaltvorgänge beeinträchtigen aber die akustische Wiedergabe des Rundfunkempfangsgerätes. Zusätzlich verursacht jede Antenne bedingt durch ihre Empfangsstörungen und den Rauschpegel ihr eigenes Klangbild bei der akustischen Wiedergabe durch den Lautsprecher. Der Hörer bemerkt daher ständig von Umschaltvorgang zu Umschaltvorgang wechselnde Klangbilder des Lautsprechers, was einen unangenehmen, unruhigen, unsteten Höreindruck vermittelt, den man treffend als einen brutzelnden Höreindruck bezeichnen kann.

Eine derart ungünstige Empfangsbedingung, die zu häufigem unnötigem Umschalten auf eine andere Antenne führt, liegt zum Beispiel vor, wenn ein Sender mit nur geringer Feldstärke empfangen wird, weil Rauschen und andere Empfangsstörungen dann kaum voneinander zu unterscheiden sind. Doch auch bei hohen Empfangsfeldstärken kann es vorkommen, dass eine Antenne mit stark gestörtem Empfang häufig, wenn auch nur kurzfristig, an den Funkempfänger geschaltet wird, obwohl andere Antennen einen besseren Empfang bieten. Wenn Nachbarkanalstörungen auftreten, liegt ebenfalls eine Empfangsbedingung vor, die häufiges Umschalten auf andere Antennen bewirkt.

Es ist daher Aufgabe der Erfindung, ein Verfahren zur Auswahl einer von mehreren Antennen einer Antennendiversity-Empfangsanlage sowie eine Antennendiversity-Empfangsanlage so zu gestalten, dass unnötige Umschaltungen auf eine andere Antenne weitestgehend vermieden werden.

Die in den Ansprüchen 1 und 7 angegebene Lösung dieser Aufgabe sieht vor, dass die Bandbreite der Auswerteschaltung gleichgroß gewählt wird wie die Bandbreite der ZF-Selektion des Funkempfängers und dass für die Auswerkschaltung ein ZP-Signal an der letzten ZF-Stufe des Funkempfängers abgegriffen wird.

Eine Weiterbildung der Erfindung sieht vor, dass am Ausgang eines Stördetektors des Funkempfängers Störungen anzeigende Impulse integriert werden und dass die Auswahlschaltung eine andere Antenne an den Funkempfänger schaltet, wenn das Integral der integrierten Störungen anzeigenden Impulse einen vorgebbaren Schwellwert überschreitet.

Eine andere Weiterbildung der Erfindung sieht vor, dass eine logische Schaltungsanordnung die Auswahl einer Antenne nach anderen Kriterien als die Auswerteschaltung vornimmt, wenn die Feldstärken bei allen Antennen über einem oberen Schwellwert oder unter einem unteren Schwellwert liegen.

Eine andere Weiterbildung der Erfindung sieht vor, dass eine logische Schaltungsanordnung die Anzahl der je Zeiteinheit auftretenden Umschaltvorgänge von einer Antenne auf eine andere Antenne erfasst und dass bei einer vorgegebenen Höchstzahl an Umschaltvorgängen je Zeiteinheit die logische Schaltungsanordnung die Auswahl einer Antenne nach anderen Kriterien als die Auswerteschaltung vornimmt.

Eine andere Weiterbildung der Erfindung sieht vor, dass der Ausgang eines Stördetektors, der bei Störungen im Empfangssignal Störungen anzeigende Impulse erzeugt, des Funkempfängers mit dem Eingang eines Integrators verbunden ist, dessen Ausgang mit dem Eingang eines Schwellwertdetektors verbunden ist, und dass der Ausgang des Schwellwertdetektors mit dem Steuereingang des Antennenwahlschalters verbunden ist.

Eine andere Weiterbildung der Erfindung sieht vor, dass die Auswerteschaltung und der Funkempfänger mit Eingängen einer logischen Schaltungsanordnung verbunden sind, deren Ausgang mit einem Eingang der Auswerteschaltung verbunden ist.

In der Zeichnung zeigen:
- Fig. 1: ein erstes Ausführungsbeispiel und
- Fig. 2: ein zweites Ausführungsbeispiel einer erfindungsgemäßen Antennendiversity-Empfangsanlage.

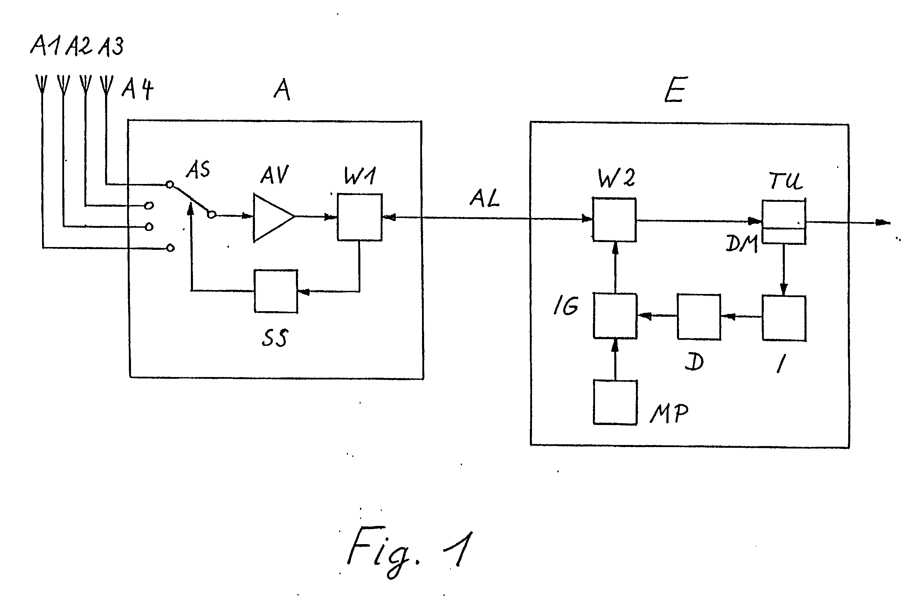

Anhand der Fig. 1 werden nun ein erfindungsgemäßes Verfahren und eine erfindungsgemäße Antennendiversity-Empfangsanlage beschrieben und erläutert.

Bei Empfangsstörungen treten am Ausgang des Stördetektors des Funkempfängers Störungen, zum Beispiel Amplitudeneinbrüche, anzeigende Impulse auf. Diese Impulse werden mittels eines Integrators integriert. Eine Umschaltung auf eine andere Antenne erfolgt jedoch erst dann, wenn das Integral der integrierten Impulse am Ausgang des Demodulators einen vorgebbaren Schwellwert überschreitet. Durch diese Maßnahme werden zu häufige und unnötige Umschaltungen auf eine andere Antenne vermieden.

Die in Fig. 1 abgebildete Antennendiversity-Empfangsanlage ist aus einer Antenneneinheit A und einer Empfangseinheit E aufgebaut, die räumlich getrennt und durch eine Antennenleitung AL, beispielsweise eine HF-Leitung, miteinander verbunden sind. Eine derartige Antennendiversity-Empfangsanlage ist in DE 196 03 514 A1 beschrieben.

Mehrere Antennen A1 bis A4, die beispielsweise die Scheibenantennen eines Fahrzeuges sein können, sind an einen Antennenwahlschalter AS der Antenneneinheit A angeschlossen. In der Antenneneinheit A ist der Ausgang des Antennenwahlschalters AS mit dem Eingang eines Antennenverstärkers AV verbunden, dessen Ausgang mit einem Eingang einer Weiche W1 verbunden ist. Der Antennenverstärker AV ist nicht zwingend erforderlich. Er kann auch an anderer Stelle angeordnet sein. Ein Ausgang der Weiche W1 ist mit dem Eingang einer Steuerschaltung SS verbunden, deren Ausgang mit dem Steuereingang des Antennenwahlschalters AS verbunden ist. Ein weiterer Ausgang der Weiche W1 der Antenneneinheit A ist über eine Antennenleitung AL mit dem Eingang einer Weiche W2 der Empfangseinheit E verbunden. Vorzugsweise ist für die Antennenleitung AL eine HF-Leitung vorgesehen; anstelle einer derartigen Koaxialleitung kann aber zum Beispiel auch eine Lichtleiterfaser vorgesehen sein.

In der Empfangseinheit E ist der Ausgang der Weiche W2 mit dem Eingang des Funkempfängers TU verbunden, dessen Ausgang mit dem nicht dargestellten NF-Teil der Empfangseinheit E verbunden ist. Der Ausgang des Stördetektors DM ist mit dem Eingang eines Integrators I verbunden, dessen Ausgang mit dem Eingang eines Schwellwertdetektors D verbunden ist. Der Ausgang des Schwellwertdetektors D ist mit dem Eingang eines Impulsgenerators IG verbunden, dessen Ausgang mit einem Eingang der Weiche W2 verbunden ist. An den Impulsgenerator IG kann eine logische Schaltungsanordnung, zum Beispiel ein Mikroprozessor MP, ein Mikrocontroller oder ein Mikrocomputer angeschlossen sein. Der Integrator I, der Schwellwertdetektor D und der Impulsgenerator IG können auch im Mikroprozessor MP integriert sein.

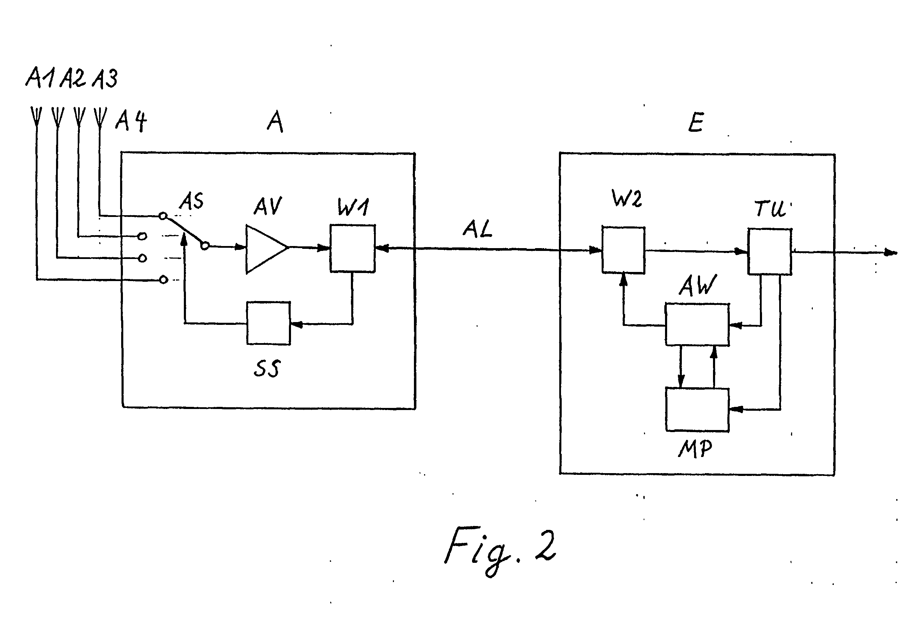

Bei Empfangsstörungen treten am Ausgang des Stördetektors DM des Funkempfängers TU Störungen anzeigende Impulse auf, die im Integrator I integriert werden. Sobald das Integral der integrierten Impulse einen vorgebbaren Schwellwert überschreitet, gibt der Schwellwertdetektor D einen Impuls an den Impulsgenerator IG ab, der ein Schaltsignal über die Weiche W2, die Antennenleitung AL und die Weiche W1 zur Steuerschaltung SS der Antenneneinheit A sendet. Das vom Impulsgenerator IG ausgesendete Schaltsignal bewirkt, dass die Steuerschaltung SS den Antennenwahlschalter AS schaltet, um eine andere Antenne mit dem Funkempfänger TU zu verbinden. Wie bei der zuvor an den Funkempfänger TU angeschlossenen Antenne werden wieder im Integrator I die Impulse am Ausgang des Stördetektors DM integriert. Erreicht das Integral den vorgebbaren Schwellwert, so gibt der Impulsgenerator IG wieder ein Schaltsignal an die Steuerschaltung SS der Antenneneinheit A ab, die den Antennenwahlschalter AS weiter zu einer anderen Antenne schaltet. Der Impulsgenerator IG kann zusätzlich vom Mikroprozessor MP gesteuert werden. Die in den Ansprüchen 3 und 4 beschriebenen erfindungsgemäßen Verfahren werden beispielhaft an der in Fig. 2 im Blockschaltbild dargestellten Antennendiversity-Empfangsanlage erläutert.

In EP 0 475 188 B1 ist beispielsweise ein Stördetektor für einen Funkempfänger beschrieben, der bei Störungen im Empfangssignal, zum Beispiel bei Amplitudeneinbrüchen, Störungen anzeigende Impulse erzeugt. Dieser Stördetektor lässt sich zum Beispiel in vorteilhafter Weise einsetzen.

In der Fig. 2 ist ein Blockschaltbild einer Antennendiversity-Empfangsanlage gezeigt, die aus einer Antenneneinheit A und einer räumlich von ihr getrennten Empfangseinheit E aufgebaut ist, wie sie in DE 196 03 514 A1 beschrieben ist.

Wie in der Fig. 1 sind mehrere Antennen A1 bis A4 an die Eingänge eines Antennenwahlschalters AS angeschlossen, dessen Ausgang mit dem Eingang eines Antennenverstärkers AV verbunden ist, der jedoch nicht zwingend erforderlich ist. Er kann auch an anderer Stelle angeordnet sein. Der Ausgang des Antennenverstärkers AV ist mit dem Eingang einer Weiche W1 verbunden, deren erster Ausgang mit dem Eingang einer Steuerschaltung SS und deren anderer Ausgang über eine Antennenleitung AL mit dem Eingang einer Weiche W2 verbunden ist. Der Ausgang der Steuerschaltung SS ist mit dem Steuereingang des Antennenwahlschalters AS verbunden. Der Antennenwahlschalter AS, der Antennenverstärker AV, die Weiche W1 und die Steuerschaltung SS bilden die räumlich von der Empfangseinheit E getrennte Antenneneinheit A.

In der Empfangseinheit E ist der Ausgang der Weiche W2, deren Eingang über die Antennenleitung AL mit der Weiche W1 der Antenneneinheit A verbunden ist, mit dem Eingang eines Funkempfängers TU verbunden. Der NF-Ausgang des Funkempfängers TU ist mit der nichtgezeigten NF-Stufe der Empfangseinheit E verbunden. Die ZF-Selektion des Funkempfängers TU ist mit dem Eingang einer Auswerteschaltung AW verbunden, deren Ausgang mit einem weiteren Eingang der Weiche W2 verbunden ist. Ein weiterer Ausgang des Funkempfängers TU sowie der Auswerteschaltung AW sind mit Eingängen einer logischen Schaltungsanordnung MP verbunden. Der Steuerausgang der logischen Schaltungsanordnung MP, für die ein Mikroprozessor, ein Mikrocontroller oder ein Mikrocomputer besonders gut geeignet sind, ist mit dem Steuereingang der Auswerteschaltung AW verbunden.

Die Auswerteschaltung AW wertet ein Ausgangssignal, zum Beispiel das ZF-Signal einer ZF-Stufe, des Funkempfängers TU aus und erzeugt in Abhängigkeit von dieser Auswertung Schaltsignale zur Umschaltung an eine andere Antenne.

Diese Schaltsignale werden von der Auswerteschaltung AW über die Weiche W2, die Antennenleitung AL und die Weiche W1 zur Steuerschaltung SS der Antenneneinheit A gesendet, die den Antennenwahlschalter AS betätigt, um eine andere Antenne an den Funkempfänger TU anzuschließen.

Wie bereits eingangs erläutert, führt bei niederen Feldstärken die Auswerteschaltung AW häufig unnötige Umschaltungen auf andere Antennen durch, weil bei niederen Feldstärken Rauschen und andere Empfangsstörungen kaum oder gar nicht voneinander zu unterscheiden sind. Dies kann zum Beispiel dazu führen, dass bei niederen Feldstärken bei allen durchgeschalteten Antennen Störungen detektiert werden, obwohl in Wirklichkeit nur erhöhtes Rauschen vorhanden ist. Bei derart ungünstigen Empfangsbedingungen schaltet der Antennenwahlschalter ständig auf eine andere Antenne um.

Aber auch bei hohen Feldstärken kann es häufig vorkommen, dass eine stark gestörte Antenne vom Antennenwahlschalter kurzfristig an den Funkempfänger geschaltet wird, obwohl andere Antennen einen besseren Empfang haben.

Um nun unnötiges Umschalten von einer Antenne auf eine andere bei niederen und bei hohen Feldstärken zu vermeiden, sieht das erfindungsgemäße Verfahren nach Anspruch 3 vor, dass eine logische Schaltungsanordnung die Auswahl einer Antenne nach anderen Kriterien als die Auswerteschaltung vornimmt. Wenn die Feldstärke an den Antennen A1 bis A4 unter einen vorgebbaren unteren Schwellwert sinkt, inaktiviert die logische Schaltungsanordnung MP die Auswerteschaltung AW und übernimmt die Steuerung des Antennenwahlschalters AS. Jedoch trifft die logische Schaltungsanordnung MP die Auswahl einer Antenne nach anderen Kriterien als die Auswerteschaltung AW. Beispielsweise schaltet die logische Schaltungsanordnung MP die Antenne mit der größten Feldstärke oder den geringsten Störung an den Funkempfänger TU. Das Umschaltkriterium kann auch eine Kombination aus den beiden genannten Kriterien sein. Sobald die Feldstärke an den Antennen A1 bis A4 den vorgebbaren unteren Schwellwert überschreitet, aktiviert die logische Schaltungsanordnung MP wieder die Auswerteschaltung AW, die nun erneut die Umschaltung von einer Antenne auf eine andere steuert.

Wenn die Feldstärke an den Antennen A1 bis A4 einen oberen Schwellwert überschreitet, inaktiviert die logische Schaltungsanordnung MP die Auswerteschaltung AW und übernimmt wie bei einer Feldstärke, die unterhalb des unteren Schwellwertes liegt, die Steuerung des Antennenwahlschalters AS. Sinkt die Feldstärke an den Antennen A1 bis A4 wieder unter den vorgebbaren oberen Schwellwert, so aktiviert die logische Schaltungsanordnung MP wieder die Auswerteschaltung AW, die nun erneut die Umschaltvorgänge von einer Antenne auf eine andere steuert.

Durch die im Anspruch 3 angegebenen Maßnahmen werden daher unnötige Umschaltungen auf andere Antennen bei niederen und bei hohen Feldstärken an den Antennen vermieden.

Es wird nun anhand der Fig. 2 das erfindungsgemäße Verfahren nach Anspruch 4 erläutert.

Die logische Schaltungsanordnung MP zählt die je Zeiteinheit auftretenden Umschaltvorgänge von einer Antenne auf eine andere. Überschreitet die Anzahl der Umschaltvorgänge je Zeiteinheit eine vorgebbare Höchstzahl, inaktiviert die logische Schaltungsanordnung MP die Auswerteschaltung AW, um die Steuerung des Antennenwahlschalters AS zu übernehmen, wobei die logische Schaltungsanordnung MP jedoch nach anderen Kriterien als die Auswerteschaltung AW entscheidet. Wenn die Anzahl der Umschaltvorgänge je Zeiteinheit nach den Kriterien der Auswerteschaltung AW wieder unter die vorgebene Höchstzahl fällt, aktiviert die logische Schaltungsanordnung MP wieder die Auswerteschaltung AW, die nun nach ihren Kriterien die Umschaltung auf andere Antennen vornimmt.

Eine Ausgestaltung dieses Verfahrens sieht vor, dass die logische Schaltungsanordnung MP die Anzahl der Umschaltvorgänge je Zeiteinheit auf eine vorgebbare Höchstzahl begrenzt. Beispielsweise kann die Anzahl der Umschaltungen auf eine für eine Zeitspanne von fünf Sekunden begrenzt sein. Wenn die Auswerteschaltung AW innerhalb dieser Zeitspanne von fünf Sekunden mehr als eine Umschaltung fordert, werden die restlichen vier Umschaltungen von der logischen Schaltungsanordnung MP ignoriert, so dass der Antennenwahlschalter innerhalb der Zeitspanne von fünf Sekunden nur einmal betätigt wird, um eine andere Antenne an den Funkempfänger TU anzuschließen.

Wenn Nachbarkanäle den Empfangskanal stören, liegt ebenfalls eine ungünstige Empfangsbedingung vor, die zu häufigem Umschalten von einer Antenne auf eine andere führt.

Das erfindungsgemäße Verfahren vermeidet unnötiges Umschalten von einer Antenne auf eine andere bei Nachbarkanalstörungen.

Bei dem erfindungsgemäßen Verfahren ist die Bandbreite der Auswerteschaltung gleichgroß gewählt wie die der ZF-Selektion des Funkempfängers. Durch diese Maßnahme sieht die Auswerteschaltung AW gewissermaßen die gleiche Bandbreite wie der Funkempfänger TU. Bei den bekannten Antennendiversity-Empfangsanlagen ist dagegen die Bandbreite der Auswerteschaltung AW größer gewählt als die beim Funkempfänger TU, so dass die Auswerteschaltung AW eine größere Bandbreite sieht als der Funkempfänger TU. Aus diesem Grunde werden Nachbarkanalstörungen bei bekannten Antennendiversity-Empfangsanlagen als störender eingestuft als sie in Wirklichkeit sind. Diese falsche Bewertung der Nachbarkanalstörungen bewirkt natürlich unnötige Umschaltungen auf andere Antennen, die bei dem erfindungsgemäßen Verfahren vermieden werden, weil die Auswerteschaltung AW die gleiche Bandbreite hat wie zum Beispiel eine ZF-Stufe des Funkempfängers TU. Wegen der gleichen Bandbreiten werden Nachbarkanalstörungen bei der Erfindung von der Auswerteschaltung AW nicht überbewertet, sondern richtig eingestuft.

Besonders vorteilhaft ist es, wie in Fig. 2 gezeigt ist, die Auswerteschaltung AW in der Empfangseinheit E beim Funkempfänger TU anzuordnen und die Filter des Funkempfängers TU auch für die Auswerteschaltung AW zu nutzen. Diese Maßnahme hat neben der gleichen Bandbreite noch den weiteren Vorteil, dass für die Auswerteschaltung AW keine Filter mehr erforderlich sind. Die Auswerteschaltung AW lässt sich daher preisgünstiger herstellen. Außerdem brauchen für die Auswerteschaltung nicht mehr Filter gleicher Dimension wie beim Funkempfänger TU ausgesucht zu werden, was bei Einsatz von Keramikfiltern einen bedeutenden Vorteil mit sich bringt, weil Keramikfilter mit erwünschten engen Toleranzen nicht herstellbar sind. Bei der Herstellung von Keramikfiltern sind daher aus einer Vielzahl von Filtern diejenigen herauszufinden, die ungefähr die gleichen Werte haben.

Das ZF-Signal für die Auswerteschaltung AW wird an der letzten ZF-Stufe des Funkempfängers TU abgegriffen und unmittelbar der Auswerteschaltung AW zugeführt . Wurde das ZF-Signal für die Auswerteschaltung AW an einer anderen Stufe des Funkempfängers TU abgegriffen, so wäre es über einen Bandpass der Auswerteschaltung AW zuzuleiten.

Die in den nebengeordneten Verfahrensansprüchen 1 bis 4 angegebenen erfindungsgemäßen Verfahren lassen sich beliebig miteinander kombinieren. Die erfindungsgemäßen Verfahren für eine Antennendiversity-Empfangsanlage sowie die erfindungsgemäßen Antennendiversity-Empfangsanlagen sind sowohl für ortsfeste als auch für mobile Empfangsanlagen geeignet. Besonders vorteilhaft lassen sie sich bei mobilen Empfangsanlagen wie zum Beispiel einer Rundfunk-, Fernsehempfangsanlage oder einem mobilen Telefon eines Fahrzeuges einsetzen. Wie bereits erwähnt, können die Antennen der erfindungsgemäßen Antennendiversiy-Empfangsanlage als Scheibenantennen in den Scheiben des Fahrzeuges integriert sein.

### Bezugszeichenliste

- A: Antenneneinheit
- A1 - A4: Antenne
- AL: Antennenleitung
- AS: Antennenwahlschalter
- AV: Antennenverstärker
- AW: Auswerteschaltung
- D: Schwellwertdetektor
- DM: Stördetektor
- E: Empfangseinheit
- I: Integrator
- IG: Impulsgenerator
- MP: logische Schaltungsanordnung
- SS: Steuerschaltung
- TU: Funkempfänger
- W1: Weiche
- W2: Weiche

## Patentansprüche

1. Verfahren zur Auswahl einer von mehreren Antennen (A1, A2, A3, A4) einer Antennendiversity-Empfangsanlage mit einem ZF-Stufen und eine bestimmte ZF-Selektion aufweisenden Funkempfänger (TU), mit einem Antennenwahlschalter (AS) zum Aufschalten einer der Antennen (A1, A2, A3, A4) auf den Funkempfänger (TU) und mit einer den Antennenwahlschalter (AS) steuernden Auswerteschaltung (AW), wobei der Antennenwahlschalter (AS) vom Funkempfänger (TU) räumlich getrennt ist, während die Auswerteschaltung (AW) im oder beim Funkempfänger (TU) angeordnet ist, und die Antennen (A1, A2, A3, A4) und der Antennenwahlschalter (AS) über eine gemeinsame Antennenleitung (AL) mit dem Funkempfänger (TU) und der Auswerteschaltung (AW) verbunden sind, **dadurch gekennzeichnet, dass** die Bandbreite der Auswerteschaltung gleichgroß gewählt wird wie die Bandbreite der ZF-Selektion des Funkempfängers und dass für die Auswerteschaltung (AW) ein ZF-Signal an der letzten ZF-Stufe des Funkempfängers (TU) abgegriffen wird.

2. Verfahren nach Anspruch 1, **dadurch gekennzeichnet, dass** der Funkempfänger einen Stördetektor (DM) aufweist, dass am Ausgang des Stördetektors (DM) Störungen anzeigende Impulse integriert werden und dass die Auswahlschaltung (AW) eine andere Antenne an den Funkempfänger (TU) schaltet, wenn das Integral der integrierten Impulse einen vorgebbaren Schwellwert überschreitet.

3. Verfahren nach Anspruch 1, **dadurch gekennzeichnet, dass** eine logische Schaltungsanordnung (MP) vorgesehen wird, die die Auswahl einer Antenne nach anderen Kriterien als die Auswerteschaltung (AW) vornimmt, wenn die Feldstärke bei allen Antennen (A1, A2, A3, A4) über einem oberen oder unter einem unteren Schwellwert liegt.

4. Verfahren nach Anspruch 1, **dadurch gekennzeichnet, dass** eine logische Schaltungsanordnung (MP) vorgesehen wird, die die Anzahl der je Zeiteinheit auftretenden Umschaltvorgänge von einer Antenne auf.eine andere Antenne zählt, wobei bei einer vorgebbaren Höchstzahl an Umschaltungen je Zeiteinheit die logische Schaltungsanordnung (MP) die Auswahl einer Antenne nach anderen Kriterien als die Auswerteschaltung vornimmt.

5. Verfahren nach Anspruch 3 oder 4, **dadurch gekennzeichnet, dass** die logische Auswerteschaltung (MP) die Antenne mit der größten Feldstärke und/oder der geringsten Störung auswählt.

6. Verfahren nach Anspruch 4, **dadurch gekennzeichnet, dass** die logische Schaltungsanordnung (MP) die Anzahl der je Zeiteinheit auftretenden Umschaltvorgänge von einer Antenne auf eine andere Antenne auf eine vorgebbare Höchstzahl begrenzt.

7. Antennendiversity-Empfangsanlage mit einem ZF-Stufen und eine bestimmte ZF-Selektion aufweisenden Funkempfänger (TU), mit einem Antennenwahlschalter (AS) zum Aufschalten einer der Antennen (A1, A2, A3, A4) auf den Funkempfänger (TU) und mit einer den Antennenwahlschalter (AS) steuernden Auswerteschaltung (AW), wobei der Antennenwahlschalter (AS) vom Funkempfänger (TU) räumlich getrennt ist, während die Auswerteschaltung (AW) im oder beim Funkempfänger (TU) angeordnet ist, und die Antennen (A1, A2, A3, A4) und der Antennenwahlschalter (AS) über eine gemeinsame Antennenleitung (AL) mit dem Funkempfänger (TU) und der Auswerteschaltung (AW) verbunden sind, **dadurch gekennzeichnet, dass** die Bandbreite der Auswerteschaltung gleichgroß ist wie die Bandbreite der ZF-Selektion des Funkempfängers (TU) und dass für die Auswerteschaltung (AW) ein ZF-Signal an der letzten ZF-Stufe des Funkempfängers (TU) abgegriffen wird.

8. Antennendiversity-Empfangsanlage nach Anspruch 7, **dadurch gekennzeichnet, dass** der Ausgang eines Stördetektors (DM) des Funkempfängers (TU), der bei Störungen im Empfangssignal Störungen anzeigende Impulse erzeugt mit dem Eingang eines Integrators (I) verbunden ist, dessen Ausgang mit dem Eingang eines Schwellwertdetektors (D) verbunden ist, und dass der Ausgang des Schwellwertdetektors (D) mit dem Steuereingang des Antennenwahlschalters (AS) verbunden ist.

9. Antennendiversity-Empfangsanlage nach Anspruch 7, **dadurch gekennzeichnet, dass** die Auswerteschaltung (AW) und der Funkempfänger (TU) mit Eingängen einer logischen Schaltungsanordnung (MP) verbunden sind, deren Ausgang mit einem Eingang der Auswerteschaltung (AW) verbunden ist.

10. Antennendiversity-Empfangsanlage nach Anspruch 8, **dadurch gekennzeichnet, dass** die Antennen (A1, A2, A3, A4) an die Eingänge des Antennenwahlschalters (AS) angeschlossen sind, dessen Ausgang mit dem Eingang eines Antennenverstärkers (AV) verbunden ist, dass der Ausgang des Antennenverstärkers (AV) mit dem Eingang einer ersten Weiche (W1) verbunden ist, deren erster Ausgang mit dem Eingang einer Steuerschaltung (SS) verbunden ist, dass der Ausgang der Steuerschaltung (SS) mit dem Steuereingang des Antennenwahlschalters (AS) verbunden ist, dass der Antennenwahlschalter (AS) der Antennenverstärker (AV), die erste Weiche (W1) und die Steuerschaltung (SS) eine Antenneneinheit (A) bilden, die räumlich von einer Empfangseinheit (E) getrennt angeordnet ist, in der der Ausgang einer zweiten Weiche (W2) mit dem Eingang des Funkempfängers (TU) verbunden ist, dass der Ausgang des Stördetektors (DM) des Funkempfängers (TU) mit dem Eingang des Integrators (I) verbunden ist, dessen Ausgang mit dem Eingang des Schwellwertdetektors (D) verbunden ist, dass der Ausgang des Schwellwertdetektors (D) mit dem Eingang eines Impulsgenerators (IG) verbunden ist, dessen Ausgang mit einem weiteren Eingang der zweiten Weiche (W2) verbunden ist, und dass die erste Weiche (W1) der Antenneneinheit (A) über eine Antennenleitung (AL) mit der zweiten Weiche (W2) der Empfangseinheit (E) verbunden ist.

11. Antennendiversity-Empfangsanlage nach Anspruch 9, **dadurch gekennzeichnet, dass** die Antennen (A1, A2, A3, A4) an die Eingänge des Antennenwahlschalters (AS) angeschlossen sind, dessen Ausgang mit dem Eingang eines Antennenverstärkers (AV) verbunden ist, dass der Ausgang des Antennenverstärkers (AV) mit dem Eingang einer ersten Weiche (W1) verbunden ist, dass ein Ausgang der ersten Weiche (W1) mit dem Eingang einer Steuerschaltung (SS) verbunden ist, deren Ausgang mit dem Steuereingang des Antennenwahlschalters (AS) verbunden ist, dass der Antennenwahlschalter (AS), der Antennenverstärker (AV), die erste Weiche (W1) und die Steuerschaltung (SS) eine Antenneneinheit (A) bilden, die räumlich von einer Empfangseinheit (E) getrennt ist, in der der Ausgang einer zweiten Weiche (W2) mit dem Eingang des Funkempfängers (TU) verbunden ist, dass ein erster Ausgang des Funkempfängers (TU) mit einem Eingang der Auswerteschaltung (AW) und mit einem Eingang einer logischen Schaltungsanordnung (MP) verbunden ist, dass ein erster Ausgang der Auswerteschaltung (AW) mit einem weiteren Eingang der logischen Schaltungsanordnung (MP) verbunden ist, deren Steuerausgang mit dem Steuereingang der Auswerteschaltung (AW) verbunden ist, dass ein zweiter Ausgang der Auswerteschaltung (AW) mit einem Eingang der zweiten Weiche (W2) verbunden ist und dass die erste und die zweite Weiche (W1, W2) miteinander über eine Antennenleitung (AL) verbunden sind.

12. Antennendiversity-Empfangsanlage nach Anspruch 10 oder 11, **dadurch gekennzeichnet, dass** für die Antennenleitung (AL) eine HF-Leitung oder eine Lichtfaserleitung vorgesehen ist

## Claims

1. A method of selecting one from a plurality of antennas (A1, A2, A3, A4) of an antenna diversity reception installation with a radio receiver (TU) having ZF stages and a predetermined ZF selection, an antenna selection switch (AF) for switching one of the antennas (A1, A2, A3, A4) into the radio receiver (TU) and with an evaluation circuit (AW) controlling the antenna selection switch (AS), wherein the antenna selection switch (AS) is spatially separated from the radio receiver (TU) whilst the analysis circuit (AW) is arranged in or by the radio receiver (TU) and the antennas (A1, A2, A3, A4) and the antenna selection switch (AS) are connected by means of a common antenna line (AL) to the radio receiver (TU) and the analysis circuit (AW), **characterised in that** the band width of the analysis circuit is selected to be the same as the band width of the ZF selection of the radio receiver and that a ZF signal is taken off from the last ZF stage of the radio receiver (TU) for the evaluation circuit (AW).

2. A method as claimed in claim 1, **characterised in that** the radio receiver includes an interference detector (DM) that pulses at the output of the interference detector (DM) indicating interference are integrated and that the selection circuit (AW) switches another antenna on to the radio receiver (TU) when the integral of the integrated pulses exceeds a predeterminable threshold value.

3. A method as claimed in claim 1, **characterised in that** a logic circuit device (MP) is provided, which performs the selection of an antenna in accordance with different criteria to the analysis circuit (AW) when the field strength at all the antennas (A1, A2, A3, A4) is above an upper threshold value or below a lower threshold value.

4. A method as claimed in claim 1, **characterised in that** a logic circuit device (MP) is provided, which counts the number of the switch-over processes from one antenna to another antenna occurring per unit of time, wherein at a predetminable maximum number of switch-over processes per unit of time the logic circuit device (MP) performs the selection of an antenna on different criteria to the evaluation circuit.

5. A method as claimed in claim 3 or 4, **characterised in that** the logic evaluation circuit (MP) selects the antenna with the largest field strength and/or the lowest interference.

6. A method as claimed in claim 4, **characterised in that** the logic circuit device (MP) limits the number of the switch-over processes from one antenna to another antenna occurring per unit of time to a predeterminable maximum number.

7. An antenna diversity reception installation with a radio receiver (TU) having ZF stages and a predetermined ZF selection, an antenna selection switch (AS) for switching one of the antennas (A1, A2, A3, A4) into the radio receiver (TU) and with an evaluation circuit (AW) controlling the antenna selection switch (AS), wherein the antenna selection switch (AS) is spatially separated from the radio receiver (TU) whilst the evaluation circuit (AW) is arranged in or by the radio receiver (TU) and the antennas (A1, A2, A3, A4) and the antenna selection switch (AS) are connected by means of a common antenna line (AL) to the radio receiver (TU) and the evaluation circuit (AW), **characterised in that** the band width of the evaluation circuit is the same as the band width of the ZF selection of the radio receiver (TU) and that for the evaluation circuit (AW) a ZF signal is taken off from the last ZF stage of the radio receiver (TU).

8. An antenna diversity reception installation as claimed in claim 7, **characterised in that** the output of an interference detector (DM) of the radio receiver (TU), which produces pulses indicative of interference when there is interference in the received signal, is connected to the input of an integrator (I), the output of which is connected to the input of a threshold value detector (D) and that the output of the threshold value detector (D) is connected to the control input of the antenna selection switch (AS).

9. An antenna diversity reception installation as claimed in claim 7, **characterised in that** the evaluation circuit (AW) and the radio receiver (TU) are connected to inputs of a logic circuit device (MP), the output of which is connected to an input of the evaluation circuit (AW).

10. An antenna diversity reception installation as claimed in claim 8, **characterised in that** the antennas (A1, A2, A3, A4) are connected to the inputs of the antenna selection switch (AS), the output of which is connected to the input of an antenna amplifier (AV), that the output of the antenna amplifier (AV) is connected to the input of a first combiner (W1), the first output of which is connected to the input of a control circuit (SS), that the output of the control circuit (SS) is connected to the control input of the antenna selection switch (AS), that the antenna selection switch (AS), the antenna amplifier (AV), the first combiner (W1) and the control circuit (SS) form an antenna unit (A), which is arranged spatially separated from a reception unit (E), in which the output of a second combiner (W2) is connected to the input of the radio receiver (TU), that the output of the interference detector (DM) of the radio receiver (TU) is connected to the input of the integrator (I), the output of which is connected to the input of the threshold value detector (D), that the output of the threshold value detector (D) is connected to the input of a pulse generator (IG), the output of which is connected to a further input of the second combiner (W2) and that the first combiner (W1) of the antenna unit (A) is connected via an antenna line (AL) to the second combiner (W2) of the reception unit (E).

11. The antenna diversity reception installation as claimed in claim 9, **characterised in that** the antennas (A1, A2, A3, A4) are connected to the inputs of the antenna selection switch (AS) the output of which is connected to the input of an antenna amplifier (AV), that the output of the antenna amplifier (AV) is connected to the input of a first combiner (W1), that an output of the first combiner (W1) is connected to the input of a control circuit (SS), the output of which is connected to the control input of the antenna selection switch (AS), that the antenna selection combiner (AS), the antenna amplifier (AV), the first combiner (W1) and the control circuit (SS) form an antenna unit (A), which is spatially separated from a reception unit (E), in which the output of a second combiner (W2) is connected to the input of the radio receiver (TU), that a first output of the radio receiver (TU) is connected to an input of the evaluation circuit (AW) and to an input of a logic circuit device (MP), that a first output of the evaluation circuit (AW) is connected to a further input of the logic circuit device (MP), the control output of which is connected to the control input of the evaluation circuit (AW), that a second output of the evaluation circuit (AW) is connected to an input of the second combiner (W2) and that the first and second combiners (W1, W2) are connected together by means of an antenna line (AL).

12. An antenna diversity reception installation as claimed in claim 10 or 11, **characterised in that** an HF line or an optical fibre line is provided for the antenna line (AL).

## Revendications

1. Procédé pour la sélection d'une parmi plusieurs antennes (A1, A2, A3, A4) d'un système récepteur comprenant une variété d'antennes, comportant un récepteur de radio (TU) équipé d'étages amplificateurs MF et d'une sélection de MF déterminée, un sélecteur d'antenne (AS) pour l'immixtion d'une des antennes (A1, A2, A3, A4) sur le récepteur radio (TU) et un circuit de reconnaissance et d'identification (AW) pilotant le sélecteur d'antenne (AS), dans lequel le sélecteur d'antenne (AS) est physiquement séparé du récepteur radio (TU), tandis que le circuit de reconnaissance et d'identification (AW) est disposé dans ou sur le récepteur radio (TU) et les antennes (A1, A2, A3, A4) et le sélecteur d'antenne (AS) sont raccordés, par l'intermédiaire d'un conducteur d'antenne commun (AL) au récepteur radio (TU) et au circuit de reconnaissance et d'identification (AW), **caractérisé en ce que** la largeur de bande du circuit de reconnaissance et d'identification est choisie de la même valeur que la largeur de bande de la sélection de MF du récepteur radio et **en ce que** pour le circuit de reconnaissance et d'identification (AW) un signal de MF est pris sur le dernier étage amplificateur MF du récepteur radio (TU).

2. Procédé selon la revendication 1, **caractérisé en ce que** le récepteur radio comporte un détecteur de perturbations (DM), **en ce que** des impulsions indicatrices de perturbations sont intégrées à la sortie du détecteur de perturbations (DM) et **en ce que** le circuit de reconnaissance et d'identification (AW) connecte une autre antenne au récepteur radio (TU) lorsque l'intégrale des impulsions intégrées excède un seuil de consigne pouvant être fixé par avance.

3. Procédé selon la revendication 1, **caractérisé en ce qu'**il est prévu un montage de commutation logique (MP), qui procède à la sélection d'une antenne sur la base de critères autres que le circuit de reconnaissance et d'identification (AW) lorsque l'intensité de champ au niveau de toutes les antennes (A1, A2, A3, A4) se situe au-dessus ou en-dessous d'un seuil de consigne supérieur ou inférieur.

4. Procédé selon la revendication 1, **caractérisé en ce qu'**il est prévu un montage de commutation logique (MP) qui compte le nombre d'opérations de commutation d'une antenne s'effectuant dans l'unité de temps sur une autre antenne, le montage de commutation logique (MP) procédant en l'occurrence, lorsqu'un nombre maximum de commutations dans l'unité de temps pouvant être préalablement porté en réglage est atteint, à la sélection d'une antenne sur la base de critères autres que le circuit de reconnaissance et d'identification.

5. Procédé selon la revendication 3 ou 4, **caractérisé en ce que** le montage de commutation logique (MP) sélectionne l'antenne présentant l'intensité de champ la plus élevée et, ou encore, le niveau de bruit le plus faible.

6. Procédé selon la revendication 4, **caractérisé en ce que** le montage de commutation logique (MP) limite à un nombre maximum pouvant être préalablement porté en réglage le nombre d'opérations de commutation d'une antenne sur une autre antenne s'effectuant dans l'unité de temps.

7. Système récepteur comprenant une variété d'antennes, comportant un récepteur de radio (TU) équipé d'étages amplificateurs MF et d'une sélection de MF déterminée, un sélecteur d'antenne (AS) pour l'immixtion d'une des antennes (A1, A2, A3, A4) sur le récepteur radio (TU) et un circuit de reconnaissance et d'identification (AW) pilotant le sélecteur d'antenne (AS), dans lequel le sélecteur d'antenne (AS) est physiquement séparé du récepteur radio (TU), tandis que le circuit de reconnaissance et d'identification (AW) est disposé dans ou sur le récepteur radio (TU) et les antennes (A1, A2, A3, A4) et le sélecteur d'antenne (AS) sont raccordés, par l'intermédiaire d'un conducteur d'antenne commun (AL) au récepteur radio (TU) et au circuit de reconnaissance et d'identification (AW), **caractérisé en ce que** la largeur de bande du circuit de reconnaissance et d'identification est choisie à la même valeur que la largeur de bande de la sélection de MF du récepteur radio (TU) et **en ce que** pour le circuit de reconnaissance et d'identification (AW) un signal de MF est pris sur le dernier étage amplificateur MF du récepteur radio (TU).

8. Système récepteur comportant une variété d'antennes selon la revendication 7, **caractérisé en ce que** la sortie d'un détecteur de perturbations (DM) du récepteur radio (TU) qui, en cas de survenance de perturbations au niveau du signal reçu, émet des impulsions indicatrices de perturbations, est raccordée à l'entrée d'un intégrateur (I), dont la sortie est reliée à l'entrée d'un détecteur de seuil (D) et **en ce que** la sortie du détecteur de seuil (D) est reliée à l'entrée de commande du sélecteur d'antenne (AS).

9. Système récepteur comportant une variété d'antennes selon la revendication 7, **caractérisé en ce que** le circuit d'identification et de reconnaissance (AW) et le récepteur radio (TU) sont reliés à des entrées d'un montage de commutation logique (MP), dont la sortie est raccordée à une entrée du circuit d'identification et de reconnaissance (AW).

10. Système récepteur comportant une variété d'antennes selon la revendication 8, **caractérisé en ce que** les antennes (A1, A2, A3, A4) sont branchées sur les entrées du sélecteur d'antenne (AS), dont la sortie est raccordée à l'entrée d'un amplificateur d'antenne (AV), **en ce que** la sortie de l'amplificateur d'antenne (AV) est raccordée à l'entrée d'une première dérivation (W1), dont la première sortie est raccordée à l'entrée d'un circuit de commande (SS), **en ce que** la sortie du circuit de commande (SS) est raccordée à l'entrée de commande du sélecteur d'antenne (AS), **en ce que** le sélecteur d'antenne (AS), l'amplificateur d'antenne (AV), la première dérivation (W1) et le circuit de commande (SS) constituent une unité d'antenne (A), qui est disposée physiquement séparée d'une unité de réception (E), dans laquelle la sortie d'une deuxième dérivation (W2) est raccordée à l'entrée du récepteur radio (TU), **en ce que** la sortie du détecteur de perturbations (DM) du récepteur radio (TU) est raccordée à l'entrée de l'intégrateur (I), dont la sortie est raccordée à l'entrée du détecteur de seuil (D), **en ce que** la sortie du détecteur de seuil (D) est raccordée à l'entrée d'un générateur d'impulsions (IG), dont la sortie est raccordée à une autre entrée de la deuxième dérivation (W2) et **en ce que** la première dérivation (W1) de l'unité d'antenne (A) est raccordée par l'intermédiaire d'un conducteur d'antenne (AL) à la deuxième dérivation (W2) de l'unité de réception (E).

11. Système récepteur comportant une variété d'antennes selon la revendication 9, **caractérisé en ce que** les antennes (A1, A2, A3, A4) sont branchées sur les entrées du sélecteur d'antenne (AS), dont la sortie est raccordée à l'entrée d'un amplificateur d'antenne (AV), **en ce que** la sortie de l'amplificateur d'antenne (AV) est raccordée à l'entrée d'une première dérivation (W1), **en ce que** la sortie de la première dérivation (W1) est raccordée à l'entrée d'un circuit de commande (SS), dont la sortie est raccordée à l'entrée de commande du sélecteur d'antenne (AS), **en ce que** l'amplificateur d'antenne (AV), la première dérivation (W1) et le circuit de commande (SS) constituent une unité d'antenne (A) qui est physiquement séparée d'une unité de réception (E), dans laquelle la sortie d'une deuxième dérivation (W2) est raccordée à l'entrée du récepteur radio (TU), **en ce qu'**une première sortie du récepteur radio (TU) est raccordée à une entrée du circuit de reconnaissance et d'identification (AW) et à une entrée d'un montage de commutation logique (MP), **en ce qu'**une première sortie du circuit de reconnaissance et d'identification logique (AW) est raccordée à une autre entrée de montage de commutation logique (MP), dont la sortie de commande est raccordée à l'entrée de commande du circuit de reconnaissance et d'identification logique (AW), **en ce qu'**une deuxième sortie du circuit de reconnaissance et d'identification logique (AW) est raccordée à l'entrée de la deuxième dérivation (W2) et **en ce que** la première et la deuxième dérivation (W1, W2) sont raccordées ensemble par l'intermédiaire d'un conducteur d'antenne (AL).

12. Système récepteur comportant une variété d'antennes selon la revendication 10 ou 11, **caractérisé en ce qu'**il est prévu, pour l'unité d'antenne (AL), une ligne HF ou une ligne à fibre optique.
